# EUROPEAN PATENT APPLICATION

(11) **EP 2 836 017 A1**
(43) Date of publication of application: **11.02.2015**
(21) Application number: 13360018.9
(22) Date of filing: 09.08.2013
(51) Int. Cl.: H04W 36/22, H04W 36/00, H04W 12/04

(54) **Switching a primary node**

(71) Applicant: ALCATEL LUCENT, 92100 Boulogne-Billancourt (FR)
(72) Inventor: Worrall, Chandika K., Swindon SN5 7DJ (GB); Palat, Sudeep, Swindon SN5 7DJ (GB)
(74) Representative: Greenwood, Matthew David

(57) **Abstract**

A method, in a radio communication system, for switching a primary node of a user equipment (UE) in dual connectivity with the primary node and a secondary node, switching the primary node such that the secondary node becomes the primary node for the UE; wherein the primary node is switched without modifying any traffic bearers, thereby causing no data interruptions during the switch.

## Description

### TECHNICAL FIELD

The present invention relates to a method, in a radio communication system comprising a user equipment in dual connection with a primary node and a secondary node, a telecommunications system, a primary node, a secondary node and to a user equipment.

### BACKGROUND

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as pico cells, or metro cells, typically use a customer's broadband internet connection, for example DSL, cable or the like, as backhaul towards the macrocellular network. Support of non-ideal backhaul (with one way latency of few milliseconds to few tens of milliseconds) between small cells and between small cell and macro cells is considered as the typical deployment scenario.

Small cell deployment for handling capacity needs in high traffic areas, such as hot spot areas, is an area of investigation. A proposal for handling capacity needs in high traffic areas is to provide dual connectivity support for user equipment. Dual connectivity support allows a User Equipment (UE) to be concurrently connected to a macro cell and a small cell, or to two small cells for example. A UE can thus be connected to and served by more than one cell at a time. Dual connectivity support is considered as a way to enable offloading of traffic when required.

### SUMMARY

According to an example, there is provided a method, in a radio communication system, for switching a primary node of a user equipment (UE) in dual connectivity with the primary node and a secondary node, switching the primary node such that the secondary node becomes the primary node for the UE; wherein the primary node is switched without modifying any traffic bearers, thereby causing no data interruptions during the switch. The primary node can be an anchoring or anchor node for the UE for example. In an example, the method can include transmitting a request from the primary node to the secondary node for a switch of primary node for the user equipment; transmitting mobility related user equipment context data from the anchor node to the secondary node; transmitting a request from the secondary node to a mobility management entity of the system to update a pathway associated with the primary node for the user equipment. Security of a data bearer during switching is maintained by decoupling control plane and user plane security procedures. Uplink synchronisation is maintained towards the primary node and the secondary node. An RRC security key can be derived without modifying a user plane security key.

According to an example, there is provided a radio telecommunication system comprising a primary node, a secondary node, a UE in dual connectivity with the primary node and a secondary node of the system, the system operable to transmit a request from the primary node to the secondary node for a switch of primary node for the user equipment; transmit mobility related user equipment context data from the primary node to the secondary node, transmit a request from the secondary node to a mobility management entity of the system to update a pathway associated with the primary node for the user equipment; switch the primary node such that the secondary node becomes the primary node. The system can be operable to switch the primary node without modifying any traffic bearers, thereby causing no data interruptions during the switch. The system can be further operable to maintain security of a data bearer during switching by decoupling control plane and user plane security procedures. The primary node is operable to initiate a switch on the basis of radio measurements between the primary node and the UE. The system can be operable to maintain uplink synchronisation towards the primary node and the secondary node.

According to an example, there is provided a primary node of a radio telecommunication system as provided above, operable in a dual connectivity link with a UE. According to an example, there is provided a secondary node of a radio telecommunication system as provided above, operable in a dual connectivity link with a UE.

According to an example, there is provide a UE in dual connectivity with a primary node and a secondary node of a system as provided above. According to an example, there is provided a UE in dual connectivity with a primary node (26) and a secondary node of a system, the UE operable in accordance with the method as provided above.

According to an example, there is provided a node of a radio telecommunication system operable to transmit a request to a secondary node of a system for a switch of node without modifying any traffic bearers for user equipment UE in dual connectivity with the node and the secondary node; and to transmit mobility related user equipment context data to the secondary node.

### BRIEF DESCRIPTION OF THE DRAWINGS

Embodiments will now be described, by way of example only, with reference to the accompanying drawings, in which:
Figure 1 is a schematic representation of a heterogeneous telecommunications network comprising a macro cell and a cluster of small cells;
Figure 2 is a schematic representation of a process for fast primary cell change according to an example;
Figure 3 is a schematic representation of an architecture according to an example;
Figure 4 is a schematic representation of an architecture according to an example;
Figure 5 is a schematic representation of a UP architecture combination according to an example; and
Figure 6 is a schematic representation of an overlapped small cell deployment scenario according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

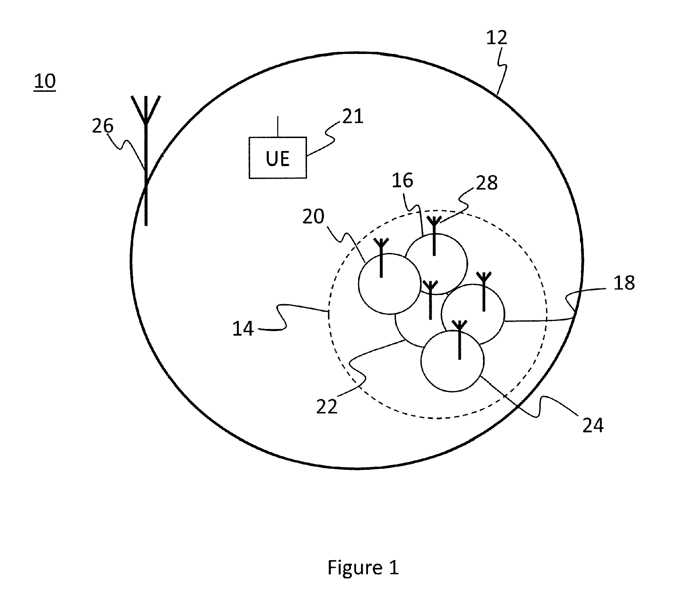

Figure 1 is a schematic representation of a heterogeneous telecommunications system 10 comprising a macro cell 12 and a cluster of small cells 14. The cell 12 and respective ones of the cells in the cluster of small cells 14 are served by E-UTRAN Node Bs, also known as Evolved Node Bs (herein "eNB", also interchangeably referred to as "nodes") which form the hardware that is connected to the radio communication network that communicates directly with mobile handsets, known as user equipment (UE).

The cluster of small cells 14 comprises a first small cell 16, a second small cell 18, a third small cell 20, a fourth small cell 22 and a fifth small cell 24. The small cells are distributed geographically to provide an area of coverage within the macro cell 12. UE 21 may roam through the network 10. When the user equipment is located within the macro cell 12, communications may be established between the user equipment and the macro cell base station 26 over an associated radio link. If the user equipment is located geographically within one of the small cells 16, 18, 20, 22 and 24, communications may be established between the user equipment and the base station of the associated small cell over an associated radio link. It will be appreciated that Figure 1 shows only an example heterogeneous network and that a plurality of macro cells may be provided, more or less than five small cells may be provided and a plurality of small cell clusters may be provided.

As described above, within the macro cell 12, there is provided multiple small cell base stations which provide a plurality of small cells 16, 18, 20, 22, and 24. The small cells provide local communications coverage for a user in their vicinity. As a user equipment comes within range of a small cell, such as the first small cell 16, a handover may occur between the base station 26 of the macro cell and the base station 28 of the small cell, such as when the base station of the small cell detects that user equipment has come within range. Likewise, as a user equipment comes within range of a different small cell, a handover may occur between the base station of the current small cell and the base station of the new small cell when the base station of the new small cell detects that user equipment has come within range.

In order to handle the capacity needs of a high traffic area, a user equipment in the telecommunications network 10 of Figure 1 may be provided with dual connectivity support. That is, a user equipment may be connected to both the macro cell 12 and the small cell 16. Also, it should be appreciated that a user equipment may be dual connected to small cell 16 and any of the other small cells 18 to 24.

Dual connectivity as described with reference to figure 1 can be used to enable offloading of traffic via small cell when required. For example, a data flow associated with a specific service in use by the user equipment can be offloaded to a small cell in high traffic areas that may otherwise cause the macro cell 12 to become overloaded for example.

Thus, UE 21 can be connected to more than one cell at a time and the UE can therefore be served by more than one cell, which can belong to different eNBs from different vendors. A small cell need not only serve offloaded traffic for dual connected UEs but can also serve legacy UEs that are directly connected to the small cell. Typically, a UE connected to the network is identified using an identifier such as an allocated Cell Radio Network Temporary Identifier, or C-RNTI, which is allocated to the UE at its initial access to the network, and which can be changed using hand over procedures.

Dual connectivity may be seen as an efficient resource utilization, such as for load balancing for example among multiple cells thereby avoiding excessive signaling load and supporting a wider bandwidth for the UE whilst enabling of aggregation of carriers from multiple cells.

As noted, in dual connectivity support, a UE is connected to more than one eNB simultaneously. However, only one eNB is in charge of any mobility related procedure towards the UE. The node in charge of the mobility acts as the mobility anchor, and can be a primary node for the UE, or anchor node. If the mobility anchoring node needs changing, such as due to the UE mobility for example, a handover procedure is performed. Current handover procedures are based on 'break before make', which means the UE breaks from the radio access network (RAN) before it re-connects to the RAN after the handover procedure. This results in UE interruption in the user plane (UP) and the control plane (CP) plane.

As one of the reasons for dual connectivity support is to reduce the user interruption, while the UE is moving around in the cellular network using a break before make handover method may not be suitable for cell change with dual connectivity support.

According to an example, a fast eNB change procedure for UE and mobility control is provided with support of dual connectivity.

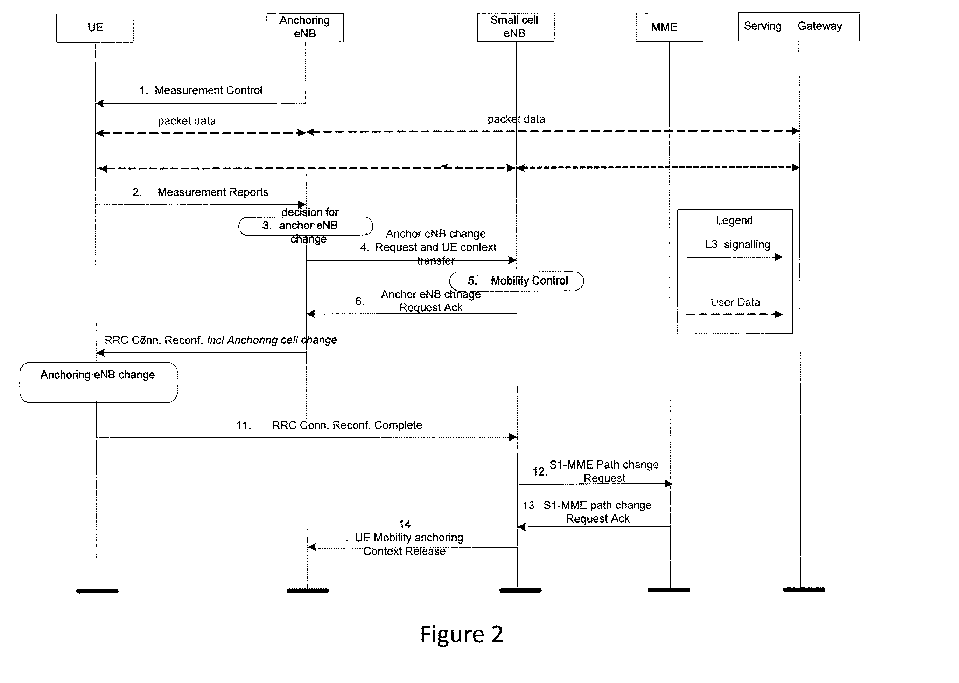

Figure 2 is a schematic representation of a process for fast anchor cell change according to an example. It is considered that the UE is configured with an anchoring eNB and small cell for dual connectivity and the UE is communicating to both eNBs. In an example, it is considered that the core network (CN) level traffic offloading, that is S1-U for offloaded RABs, terminates at the small cell. As the UE is communicating to both a primary (anchoring) and small cell, the mobility related UE context is kept at the anchoring eNB while traffic related UE context is kept at both primary and small cell. While dual connection is configured and activated, the UE maintains uplink (UL) synchronization to both eNBs.

In an example, the primary (anchoring) eNB is changed without modifying bearer offloading. Therefore, traffic bearers are not modified and hence there are no data interruptions. The UE continues receiving and transmitting data as it did prior to the anchoring eNB change. The anchoring eNB makes the decision to change the anchoring eNB to the small eNB, for example based on measurements relating to signal strength and/or positioning and so on. In an example, the anchoring eNB initiates the procedure by requesting the small cell eNB of the anchoring cell change. The mobility related UE context is also transferred to the small eNB. Upon the decision to accept the anchoring cell change the small cell sends an anchoring eNB change request ACK with new RRC parameters. The RRC parameter modification depends on the UP and CP architecture. New RRC parameters can be sent from the small cell eNB in a transparent container which the anchoring eNB forwarded to the UE. The UE applies the new parameters and informs the small cell eNB of RRC connection reconfiguration complete. New radio resource control/configuration parameters can be sent from the small cell to the anchoring eNB and the anchoring eNB provides the parameters to the UE using RRC signaling.

Upon reception of the RRC connection reconfiguration complete message, the small cell eNB requests the MME of anchoring eNB change. With the completion of the S1-MME interface termination to the small cell eNB, the small cell eNB becomes the anchoring eNB for the UE and requests the old anchoring eNB for the release of mobility related UE context.

According to an example, control plane security and user plane security procedures are decoupled. Ciphering and integrity protection keys for RRC messages and ciphering keys for user plane traffic are generated from the eNB key (K_{eNB}) which is sent from the EPC to the eNB when the UE is entering an ECM-CONNECTED state (i.e. during RRC connection or S1 context setup). **K**_{eNB} is a key derived by the UE and MME from K_{ASME}. K_{eNB} is used for the derivation of K_{RRCint} (integrity protection key of RRC messages), K_{RRCenc} (ciphering protection key of RRC messages), and K_{UPenc} (ciphering protection key of user plane traffic).

For dual activation, the small cell security keys (K_{eNB}·) can also be derived based on K_{eNB} using a similar procedure used for HO in a legacy LTE system for example. The security keys for user plane traffic (**K**_{UPenc}·) in the small cell are derived from (K_{eNB}·). Therefore, even prior to the anchoring cell change, the UE has a valid (**K**_{UPenc}·) hence the UP traffic transmission continues during the anchoring cell change. Upon the anchoring cell change, the small cell derives **K**_{RRCint}· and **K**_{RRCenc}· for the RRC messages based on the eNB key (K_{eNB}·).

The parameters for modification and the UE context for transfer to the small cell during anchoring cell change depend on the CP and UP architecture options used. There are a number of UP architecture options and CP architecture options.

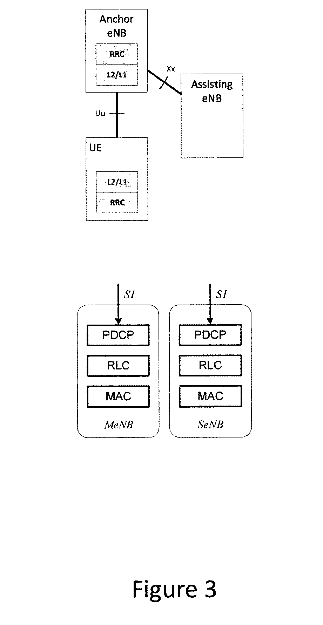

An architecture combination is shown schematically in figure 3. There is only one Radio Resource Control (RRC) towards the UE which is located at the anchoring eNB. The UP architecture support RAB offloading at the S-GW. When RRC is located at the anchoring eNB, the UE is receiving/transmitting RRC messages from/to the anchoring eNB. The anchoring eNB keeps the whole of the UE context. It is possible to have a RRC at the small cell, however this is hidden from the UE hence could be considered as virtual RRC. A virtual RRC may keep some UE context such as what may be needed for data transmission in the small cell. During the anchoring eNB change, an RRC is to be created for the UE at the small cell eNB and whole of the UE context is transferred to the small cell eNB. Considering that the UE is receiving RRC messages for the small cell eNB, RRC reconfiguration message carrying new RRC parameters for the UE from small cell RRC are transmitted via anchoring RRC with old ciphering integrity protection algorithms applied. RRC reconfiguration message conveys the new ciphering integrity protection keys /refresh intended for the small cell eNB. However, the data ciphering for the data delivered over small cell and or anchoring cell can remain the same as before. Also the radio bearer configuration does not change by the anchoring eNB change.

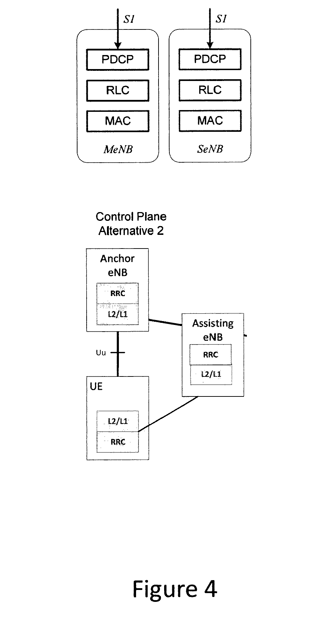

Figure 4 is a schematic representation of an architecture combination. There are two RRCs communicating to the UE. RRCs are located at the anchoring eNB and the small cell eNB. The UE communicates to both RRC over SRBs. The UP architecture supports RAB offloading at the S-GW. As the small cell already has RRC for the UE and is already communicating RRC messages to the UE, it may transmits the RRC reconfiguration message with new parameters directly from the small cell to the UE. During the anchoring eNB change, the UE mobility context is to be established at the small cell eNB. Even though the security keys changed for the RRC message protection, the data security can be maintained as before.

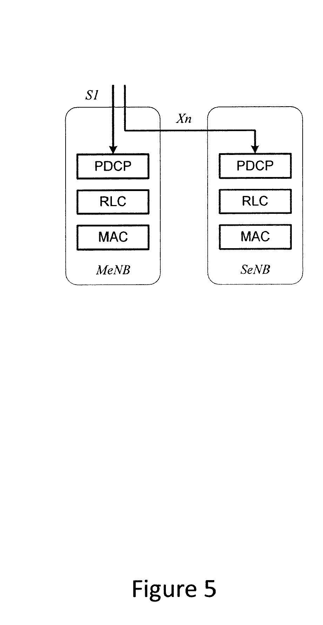

Figure 5 is a schematic representation of a UP architecture combination according to an example, where the S1-U terminates only at the anchoring eNB. The offloaded data over small cell is always traversed through anchoring eNB. When fast anchoring eNB change procedure is performed, the S1-U path and S1-MME path is to be switched to the small cell eNB. For this purpose, the path switch procedure as used in legacy handover procedures could be re-used. Even in this case, the user plane traffic transmission may continue with old UP ciphering keys at the small cell while performing the S1-U path switch.

A fast anchoring cell change procedure provides benefits in terms of reduced data plane interruption, fast cell change during RLF, and HO performance improvement in a deployment area where overlapping small cells are present.

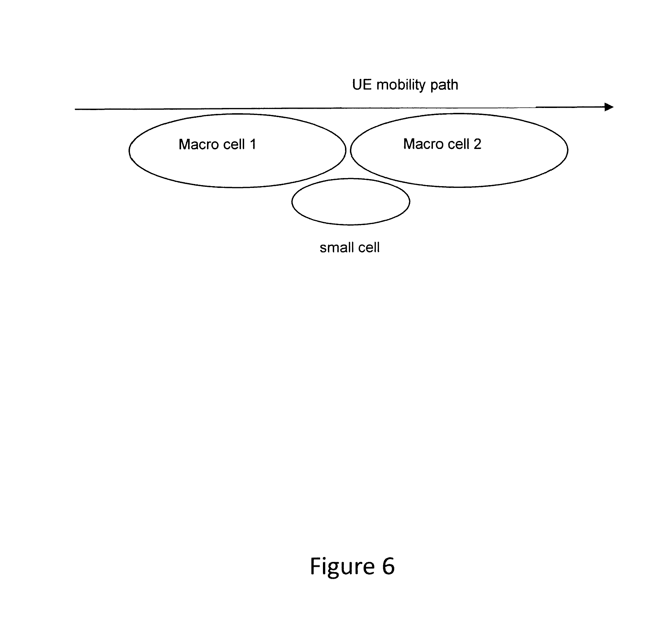

Figure 6 is a schematic representation of an overlapped small cell deployment scenario according to an example. While the UE is moving from macro cell 1 to macro cell 2, the UE can be configured with dual connectivity to a small cell. Allowing fast path switching means that the UE is able to maintain connectivity to EUTRAN, and hence maintain uninterrupted data transmission.

## Claims

1. A method, in a radio communication system, for switching a primary node of a user equipment (UE) in dual connectivity with the primary node and a secondary node, comprising: switching the primary node such that the secondary node becomes the primary node for the UE; wherein the primary node is switched without modifying any traffic bearers, thereby causing no data interruptions during the switch.

2. A method as claimed in claim 1, comprising:
transmitting a request from the primary node to the secondary node for a switch of primary node for the user equipment; transmitting mobility related user equipment context data from the primary node to the secondary node; transmitting a request from the secondary node to a mobility management entity of the system to update a pathway associated with the primary node for the user equipment.

3. A method as claimed in claim 1 or 2, further comprising maintaining security of a data bearer during switching by decoupling control plane and user plane security procedures.

4. A method as claimed in any preceding claim, wherein uplink synchronisation is maintained towards the primary node and the secondary node.

5. A method as claimed in any preceding claim, wherein an RRC security key is derived without modifying a user plane security key.

6. A radio telecommunication system (10) comprising:
a primary node (26);
a secondary node (16, 18, 20, 22, 24);
a UE (21) in dual connectivity with the primary node (26) and a secondary node (16, 18, 20, 22, 24) of the system (10);
the system operable to transmit a request from the primary node to the secondary node for a switch of primary node for the user equipment; transmit mobility related user equipment context data from the primary node to the secondary node; transmit a request from the secondary node to a mobility management entity of the system to update a pathway associated with the primary node for the user equipment; switch the primary node such that the secondary node becomes the primary node.

7. A system as claimed in claim 6, wherein the system is operable to switch the primary node without modifying any traffic bearers, thereby causing no data interruptions during the switch.

8. A system as claimed in claim 6 or 7, the system further operable to maintain security of a data bearer during switching by decoupling control plane and user plane security procedures.

9. A system as claimed in any of claims 6 to 8, the primary node being configured to initiate a switch on the basis of radio measurements between the primary node and the UE.

10. A system as claimed in any of claims 6 to 9, the system operable to maintain uplink synchronisation towards the primary node and the secondary node.

11. A primary node (26) of a radio telecommunication system (10) as claimed in any of claims 6 to 10, operable in a dual connectivity link with a UE (21).

12. A secondary node (16, 18, 20, 22, 24) of a radio telecommunication system (10) as claimed in any of claims 6 to 10, operable in a dual connectivity link with a UE (21).

13. A UE (21) in dual connectivity with a primary node (26) and a secondary node (16, 18, 20, 22, 24) of a system (10) as claimed in any of claims 6 to 10.

14. A UE (21) in dual connectivity with a primary node (26) and a secondary node (16, 18, 20, 22, 24) of a system (10), the UE (21) operable in accordance with the method as claimed in any of claims 1 to 5.

15. A node (26) of a radio telecommunication system (10) operable to:
transmit a request to a secondary node (16, 18, 20, 22, 24) of a system (10) for a switch of node without modifying any traffic bearers for user equipment UE (21) in dual connectivity with the node and the secondary node; and to transmit mobility related user equipment context data to the secondary node.
